# EUROPEAN PATENT APPLICATION

(11) **EP 4 704 164 A1**
(43) Date of publication of application: **04.03.2026**
(21) Application number: 23935518.3
(22) Date of filing: 17.11.2023
(51) Int. Cl.: H01M 4/13, H01M 4/62, H01M 4/36, H01M 4/58, H01M 4/38, H01M 4/134, H01M 10/0562, H01M 10/052, H01M 4/02

(54) **NEGATIVE ELECTRODE FOR ALL-SOLID-STATE RECHARGEABLE BATTERIES AND ALL-SOLID-STATE RECHARGEABLE BATTERIES**

(30) Priority: 25.04.2023 KR 20230054245
(71) Applicant: SAMSUNG SDI CO., LTD., Yongin-si, Gyeonggi-do 17084 (KR)
(72) Inventor: YANG, Jinhoon, Yongin-si, Gyeonggi-do 17084 (KR); LEE, Jungho, Yongin-si, Gyeonggi-do 17084 (KR); SOHN, Juhee, Yongin-si, Gyeonggi-do 17084 (KR); SHIN, Hyuksoo, Yongin-si, Gyeonggi-do 17084 (KR); LEE, Jungmin, Yongin-si, Gyeonggi-do 17084 (KR); MOON, Joongho, Yongin-si, Gyeonggi-do 17084 (KR)
(74) Representative: Michalski Hüttermann & Partner Patentanwälte mbB
(86) International application number: PCT/KR2023/018509
(87) International publication number: WO 2024/225545

(57) **Abstract**

Disclosed are a negative electrode for an all-solid-state rechargeable battery, and an all-solid-state rechargeable battery including the same, the negative electrode including a negative electrode current collector, and a negative electrode coating layer disposed on the negative electrode current collector and including a carbon material, wherein the carbon material has a d₀₀₂ value of greater than or equal to 3.500 and less than or equal to 3.620 as measured by X-ray diffraction.

## Description

### [Technical Field]

### [Background Art]

### 1. Field

A negative electrode for an all-solid-state rechargeable battery and an all-solid-state rechargeable battery are disclosed.

### 2. Description of the Related Art

Because commercially available rechargeable lithium batteries use electrolyte solutions including flammable organic solvents, there are safety issues such as explosion or fire of the batteries in the event of collision, penetration, and the like. Accordingly, an all-solid-state rechargeable battery using a solid electrolyte instead of an electrolyte solution has been proposed. All-solid-state rechargeable batteries are batteries in which all materials are made of solid, and thus they are safe as there is no risk of electrolyte solution leaking and exploding, and have the advantage of being easy to manufacture thin batteries, and can reduce the thickness of the negative electrode, improving high-rate charging and discharging performance, and realizing high-voltage driving and high energy density.

A lithium metal negative electrode may be used as a negative electrode of an all-solid-state rechargeable battery. In this case, the energy density may be increased, but there is a problem of volume expansion of lithium metal, and there is a problem of irreversible lithium dendrites growing on the surface of the negative electrode during charging and discharging, which reduces the reversible capacity and reduces safety due to battery short circuit.

Accordingly, a method is being studied in which lithium metal is not used as the negative electrode itself, but rather is precipitated on the negative electrode current collector during charging and used as the negative electrode active material. However, the existing precipitation-type negative electrode has limitations such as low initial charge/discharge efficiency and output characteristics, and the occurrence of battery short-circuit phenomenon.

### [Disclosure]

### [Technical Problem]

Provided is a negative electrode for an all-solid-state rechargeable battery in which lithium metal may be uniformly and well precipitated at a thickness during charging, and an all-solid-state rechargeable battery with improved initial charge/discharge efficiency and output characteristics.

### [Technical Solution]

In an embodiment, a negative electrode for an all-solid-state rechargeable battery includes: a negative electrode current collector; and a negative electrode coating layer disposed on the negative electrode current collector and including a carbon material, wherein the carbon material has a d₀₀₂ value of greater than or equal to 3.500 and less than or equal to 3.620 as measured by X-ray Diffraction.

In another embodiment, an all-solid-state rechargeable battery includes negative electrode and the positive electrode, and a solid electrolyte membrane between the negative electrode and the positive electrode.

### [Advantageous Effects]

The negative electrode for an all-solid-state rechargeable battery according to an embodiment may induce precipitation of a good lithium metal layer of uniform thickness during charging, thereby improving electrochemical characteristics such as initial charge/discharge efficiency and output characteristics of the all-solid-state rechargeable battery.

### [Description of the Drawings]

FIG. 1 is a cross-sectional view schematically showing an all-solid-state rechargeable battery according to an embodiment.
FIG. 2 is a schematic view of the carbon material of the negative electrode coating layer of Example 1.
FIG. 3 is a field emission scanning electron microscope (FE-SEM) image of a cross-section of the negative electrode coating layer of Example 1.
FIG. 4 is a schematic view of the carbon material of the negative electrode coating layer of Comparative Example 1.
FIG. 5 is an FE-SEM image of a cross-section of the negative electrode coating layer of Comparative Example 1.
FIG. 6 is a schematic view of the carbon material of the negative electrode coating layer of Comparative Example 2.
FIG. 7 is an FE-SEM image of a cross-section of the negative electrode coating layer of Comparative Example 2.
FIG. 8 is a schematic view of the carbon material of the negative electrode coating layer of Comparative Example 3.
FIG. 9 is an FE-SEM image of a cross-section of the negative electrode coating layer of Comparative Example 3.
FIG. 10 is a schematic view of the carbon material of the negative electrode coating layer of Comparative Examples 4 and 5.
FIG. 11 is an FE-SEM image of a cross-section of the negative electrode coating layer of Comparative Example 4.
FIG. 12 is an FE-SEM image of a cross-section of the negative electrode coating layer of Comparative Example 5.
FIG. 13 is an image of a cross-section of a negative electrode taken by FE-SEM after initial charging of an all-solid-state rechargeable battery cell of Example 1.
FIG. 14 is an image of the cross-section of the negative electrode of the all-solid-state rechargeable battery cell of Comparative Example 4 taken by FE-SEM after initial charging.
FIG. 15 is an image of a cross-section of a negative electrode taken by FE-SEM after initial charging of an all-solid-state rechargeable battery cell of Comparative Example 5.

### [Best Mode]

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

"Combination thereof" means a mixture, a laminate, a composite, a copolymer, an alloy, a blend, a reaction product, and the like of the constituents.

It should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

The average particle diameter may be measured by a method well known to those skilled in the art, for example, may be measured by a particle size analyzer, or may be measured by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution. As used herein, when a definition is not otherwise provided, the average particle diameter means a diameter (D50) of particles having a cumulative volume of 50 volume% in the particle size distribution that is obtained by measuring the size (diameter or length of the major axis) of about 20 particles at random in a scanning electron microscope image.

"Or" is not to be construed as an exclusive meaning, for example, "A or B" is construed to include A, B, A+B, and the like.

"Metal" is interpreted as a concept including ordinary metals, transition metals and metalloids (semi-metals).

### Negative Electrode

In an embodiment, a negative electrode for an all-solid-state rechargeable battery includes a negative electrode current collector, and a negative electrode coating layer disposed on the negative electrode current collector and including a carbon material. The carbon material of the negative electrode coating layer is characterized by having a d₀₀₂ value of greater than or equal to 3.500 and less than or equal to 3.620 as measured by X-ray diffraction method.

### Negative Electrode Coating Layer

The negative electrode coating layer may be a layer that helps lithium ions released from the positive electrode active material move toward the negative electrode when charging an all-solid-state rechargeable battery, and facilitates the deposition of lithium metal on the surface of the negative electrode current collector. When charging, lithium metal is precipitated between the negative electrode current collector and the negative electrode coating layer to form a lithium metal layer, which acts as the negative electrode active material. Such a negative electrode may be expressed as a precipitation-type negative electrode, and the negative electrode coating layer may be expressed as a lithium electrodeposition-inducing layer or a negative electrode catalyst layer.

A carbon material of the negative electrode coating layer plays a role of helping absorption of lithium ions discharged from the positive electrode during the charge and then, smooth movement and pass of the lithium ions with low energy and thus uniform precipitation as lithium metal on the surface of a current collector. An embodiment presents a carbon material with properties optimized to perform this role. As for the carbon material of the negative electrode coating layer, amorphous carbon is usually used, for example, carbon black, activated carbon, acetylene black, Denka black, Ketjen black, or a combination thereof may be used. However, because even the same type of carbon material may have various properties, an embodiment proposes a carbon material having properties optimized for inducing uniform precipitation of lithium metal.

The carbon material according to an embodiment is characterized in that a (002) plane has an average interplanar spacing (d₀₀₂) of greater than or equal to 3.500 and less than or equal to 3.620, which is measured in an X-ray diffraction method. The d₀₀₂ refers to an interlayer spacing (d-spacing) of carbon and may be used as criteria for crystallinity of the carbon material and use a unit of Å. The d₀₀₂ of the carbon material may be, for example, greater than or equal to 3.550 and less than or equal to 3.615 or greater than or equal to 3.555 and less than or equal to 3.610. The carbon material, which has d₀₀₂ within the ranges, may have the most optimal crystallinity for being applied to the negative electrode coating layer and lower mobility energy of the lithium ions, thereby inducing smooth movement of the lithium ions to be electrode posited on the current collector surface. If the carbon material has d₀₀₂ of greater than 3.620, as crystallinity of the carbon material increases, the mobility energy of lithium ions may be increased, but if the d₀₀₂ is less than 3.500, the carbon has an instable structure, which may hinder the movement of lithium ions, thereby making it difficult to induce uniform precipitation of lithium metal and deteriorating charge/discharge efficiency or output characteristics of the all-solid-state rechargeable battery.

The d₀₀₂ may be calculated from the Bragg equation using a Bragg 2Θ angle and a full width at half maximum (FWHM) of a peak of the (002) plane in an X-ray diffraction analysis of the carbon material, wherein the X-ray diffraction analysis may be performed under a wavelength condition of 1.541838 Å (CuK α ).

The carbon material of an embodiment may have primary particles with a particle diameter of greater than or equal to 20 nm and less than or equal to 200 nm, for example, greater than or equal to 20 nm and less than or equal to 150 nm, greater than or equal to 20 nm and less than or equal to 100 nm, greater than or equal to 20 nm and less than or equal to 70 nm, or greater than or equal to 30 nm and less than or equal to 45 nm. If the carbon material satisfying the primary particle size ranges is applied to the negative electrode coating layer, resistance to the movement of lithium ions may be minimized, inducing uniform precipitation of a lithium metal layer and resultantly, improving charge/discharge efficiency and output characteristics of the all-solid-state rechargeable battery. For example, if the carbon material has a primary particle size of greater than 200 nm, pores between the particles becomes larger, increasing the resistance to the movement of lithium ions, but if the carbon material has a primary particle size of less than 20 nm, processability may be deteriorated, or it may be difficult to form a good negative electrode coating layer.

The particle diameter of the primary particles of carbon material may be measured, for example, through an electron microscope such as SEM, FE-SEM, or TEM for the negative electrode coating layer. Specifically, it may be obtained by randomly measuring the size (diameter or length of the major axis) of about 20 primary particles of the carbon material in an electron microscope image of the negative electrode coating layer to obtain a particle size distribution, and taking the size of the particle having a cumulative volume of 50 volume% in the particle size distribution, i.e., the D₅₀ value, as the particle size of the primary particles.

The primary particles of the carbon material according to an embodiment may have circularity of 0.80 or more and 1.0 or less, for example, 0.81 or more and 1.0 or less, 0.82 or more and 1.0 or less, 0.83 or more and 1.0 or less, 0.84 or more and 1.0 or less, 0.80 or more and 0.99 or less, 0.80 or more and 0.95 or less, or 0.80 or more and 0.91 or less. When the circularity of the carbon material satisfies the above range, the movement distance of lithium ions within the negative electrode coating layer may be minimized, thereby helping lithium metal to be uniformly precipitated on the surface of the current collector. For example, if the circularity of the carbon material is less than 0.80, or if the carbon material is not close to a circle but has a plate, branch, or needle shape, the distance for lithium movement within the negative electrode coating layer becomes longer, making it difficult to expect effective lithium precipitation, and as a result, the output characteristics of the battery may deteriorate.

The circularity of the carbon material, as it approaches 1 from 0, means that the shape is closer to a sphere and may be, for example, measured through Image J program by using electron microscope images such as FE-SEM and the like and the like of the negative electrode coating layer. In other words, through the Image J program, about 20 to 50 primary particles in the electron microscope images of the negative electrode coating layer may be recognized to derive their circularity.

The carbon material according to an embodiment may have a ratio (ID/IG) of D band intensity to G band intensity of greater than or equal to 1.5 and less than or equal to 3.0, for example, greater than or equal to 1.6 and less than or equal to 3.0, greater than or equal to 1.7 and less than or equal to 3.0, greater than or equal to 1.8 and less than or equal to 3.0, greater than or equal to 1.9 and less than or equal to 3.0, greater than or equal to 2.0 and less than or equal to 3.0, greater than or equal to 2.1 and less than or equal to 3.0, greater than or equal to 1.5 and less than or equal to 2.9, or greater than or equal to 1.5 and less than or equal to 2.8, which is measured by Raman spectroscopy.

The I_{D}/I_{G} ratio may be defined as a ratio of D peak intensity to G peak intensity in the Raman spectroscopy. A D peak may be a peak appearing at a wavelength of about 1200 cm⁻¹ to 1400 cm⁻¹ and indicating an SP³ bond such as C-H, C-OH, C-OOH, and the like. A G peak may be a peak appearing at a wavelength of about 1400 cm⁻¹ to 1600 cm⁻¹ and indicating an SP² bond of C-C. The higher I_{D}/I_{G} ratio of the carbon material, the more defects such as C-OOH, C-OH, and the like. If the I_{D}/I_{G} ratio of the carbon material according to an embodiment satisfies greater than or equal to 1.5 and less than or equal to 3.0, the carbon material has an appropriately high defect rate, which increases its affinity for lithium and thus lowers mobility energy of lithium ions, thereby inducing uniform precipitation of lithium metal and improving charge/discharge efficiency and output characteristics of the battery. For example, if the I_{D}/I_{G} ratio is less than 1.5, the carbon material may have low lithium affinity, thereby increasing mobility energy of lithium ions and making it difficult to induce the uniform precipitation of lithium metal and resultantly, deteriorating initial charge/discharge efficiency and output characteristics of the battery.

The I_{D}/I_{G} of the carbon material may be obtained through the Raman spectroscopy, for example, measured by using an analyzing device, Raman 2010 Spectra (NT-MDT Development Co.).

The carbon material according to an embodiment may have a BET specific surface area of 10 m²/g to 200 m²/g, for example, 20 m²/g to 150 m²/g, 30 m²/g to 120 m²/g, 40 m²/g to 100 m²/g, or 45 m²/g to 90 m²/g. If the BET specific surface area of the carbon material satisfies the ranges, lithium ions may not be locked in the carbon material but smoothly pass the carbon material. For example, if the BET specific surface area is greater than 200 m²/g, the carbon material internally may have relatively more and larger pores, in which the lithium ions may be locked and have a longer movement path, ultimately hindering the precipitation of lithium metal and resultantly deteriorating electrochemical characteristics of the all-solid-state rechargeable battery. The BET specific surface area may be, for example, measured by using HM model-1208 (Mountech Co., Ltd.) and the like in a nitrogen gas adsorption method.

The carbon material according to an embodiment may have a pore size between primary particles of greater than or equal to 10 nm and less than or equal to less than or equal to 1000 nm, for example, greater than or equal to 20 nm and less than or equal to 900 nm, greater than or equal to 30 nm and less than or equal to 700 nm, or greater than or equal to 40 nm and less than or equal to 500 nm. If the pore size between carbon particles satisfies the ranges, the path of lithium ions may be minimized, inducing uniform precipitation of lithium metal. If the pore size is too large, lithium ions may have a longer movement path of or have higher movement energy, making uniform precipitation of lithium metal difficult.

The size of the pores between the primary particles of the carbon material may be obtained by randomly measuring the sizes (diameter or length of the major axis) of about 20 pores in an electron microscope photograph of a cross-section of a negative electrode coating layer, for example, and taking the arithmetic average of these, and can also be expressed as the average pore size.

Meanwhile, the carbon material in an embodiment may include a sulfur element, a sulfur-containing functional group, a sulfur-containing compound, or a combination thereof, which is located on the surface. In other words, on the surface of the carbon material according to an embodiment, the sulfur element, the sulfur-containing functional group, or the sulfur-containing compound may be present, for example, the sulfur element, the sulfur-containing functional group, or the sulfur-containing compound may be coated on the surface of carbon material particles in the form of a continuous film or an island. Herein, the carbon material may have increased affinity for lithium, improved miscibility with a sulfide-based solid electrolyte, or improved bonding with a lithiophilic metal or improved dispersion of the lithiophilic metal in the negative electrode coating layer.

The sulfur-containing functional group may be, for example, a thiol group, a sulfide group, a sulfonic acid group, a sulfone group, a sulfoxide group, or a combination thereof.

A sulfur-containing compound refers to an organic compound containing elemental sulfur, and may also be referred to as a compound having the aforementioned sulfur-containing functional group. For example, the sulfur-containing compound may be a thiol compound, a sulfide-based compound, a thiophene-based compound, a sulfonic acid, a sulfone, a sulfoxide, or a combination thereof.

The thiol compound may include, for example, mercapto acetic acid, 1-dodecanethiol, 6-mercapto-1-hexanol, 11-mercapto-1-undecanol, 2-naphthalenethiol, 1,4-benzenedimethanethiol, 4-mercaptobenzoic acid, 1,3-benzenedithiol, or a combination thereof.

The sulfide-based compound may include, for example, polyphenylene sulfide, carbon disulfide, metal sulfide, or a combination thereof. In metal sulfides, the metal may be, for example, Ag, Na, Zn, Fe or a combination thereof.

The thiophene-based compound may include, for example, thiophene (C₄H₄S), 2-methylthiophene, thianaphthalene, 4,6-dimethylbenzothiophene, or a combination thereof.

The sulfonic acid may include, for example, p-toluene sulfonic acid, sodium dodecylbenzenesulfonate, taurine, or a combination thereof, the sulfone may include dimethyl sulfone, 4,4'-dichlorodiphenyl sulfone, or a combination thereof, and the sulfoxide may include dimethyl sulfoxide, methyl phenyl sulfoxide, or a combination thereof.

By mixing carbon material and sulfur-containing raw material in a dry or wet manner and optionally heat-treating them, sulfur element, sulfur-containing functional group, or sulfur-containing compound may be introduced to the surface of the carbon material. The heat treatment can be performed at a temperature range of, for example, 70 °C to 110 °C. The sulfur-containing raw material may include the aforementioned thiol compound, sulfide-based compound, thiophene-based compound, sulfonic acid, sulfone, sulfoxide, or a combination thereof.

When the sulfur element, sulfur-containing functional group, or sulfur-containing compound is present on the surface of the carbon material, a weight ratio of carbon to sulfur may be, for example, 4:1 to 999:1, 4:1 to 900:1, 5:1 to 100:1, or 5:1 to 20:1.

Meanwhile, the negative electrode coating layer may further include a lithiophilic metal in addition to the carbon material. When the negative electrode coating layer further includes a lithiophilic metal, lithium metal may be effectively precipitated on the surface of the negative electrode current collector during charging, a lithium metal layer of uniform thickness may be formed, the electrical conductivity of the negative electrode may be further improved, and the electrochemical characteristics of the all-solid-state rechargeable battery may be improved.

The lithiophilic metal may include, for example, Al, Ag, Au, Bi, Cu, Ge, In, Mg, Ni, Pd, Pt, Si, Sn, Zn, or a combination thereof, and may be composed of one of these or an alloy of two or more of these. The average particle diameter (D₅₀) of the lithiophilic metal may be about 900 nm or less, for example, 5 nm to 900 nm, 5 nm to 500 nm, 10 nm to 200 nm, 10 nm to 100 nm, or 20 nm to 80 nm. When the average particle diameter of the lithiophilic metal satisfies the above range, the uniformity of the particle size increases and it is appropriately distributed within the negative electrode coating layer, effectively inducing precipitation of lithium metal.

An amount of the lithiophilic metal may be 3 wt% to 40 wt%, for example, 3 wt% to 30 wt%, 4 wt% to 25 wt%, 5 wt% to 20 wt%, or 5 wt% to 15 wt% based on 100 wt% of the negative electrode coating layer. When the amount of the lithiophilic metal satisfies the above range, a uniform lithium metal layer may be effectively formed during charging.

The negative electrode coating layer may include a mixture of carbon material and a lithiophilic metal, or may include a composite in which a lithiophilic metal is supported on a carbon material.

In an embodiment, the carbon material and the lithiophilic metal may be chemically bonded through sulfur. In other words, the carbon material and the lithiophilic metal may not be simply physically mixed but may be chemically bonded to each other. In this case, the bonding power between the carbon material and the lithiophilic metal is excellent, and the problem of the carbon material and the lithiophilic metal being separated from each other during the mixing process can be effectively prevented. Additionally, the phenomenon of agglomeration of lithiophilic metals is prevented and they can be uniformly dispersed within the negative electrode coating layer, thereby making the current distribution within the negative electrode uniform and leading to uniform precipitation of lithium metal.

When a carbon material and a lithiophilic metal are chemically bonded through sulfur, a peak related to the bond between the lithiophilic metal and sulfur can be confirmed in the X-ray photoelectron spectroscopy (XPS) spectrum. For example, when the lithiophilic metal includes Ag, a peak can be confirmed in the range of 160 eV to 162 eV, which is the Ag-S binding energy, in the S2p spectrum obtained by XPS analysis.

A composite in which a carbon material and a lithiophilic metal are chemically bonded through sulfur can be prepared by mixing the carbon material and sulfur-containing raw materials in a dry or wet manner, optionally heat-treating them, and then supporting and heat-treating the lithiophilic metal.

A method of supporting a lithiophilic metal may be, for example, a method of mixing a mixture of a carbon material and a sulfur-containing raw material, a lithiophilic metal compound, and a reducing agent in a solvent. A solvent may include, for example, water, ethanol, glycerol, benzene, xylene, or a combination thereof, and the reducing agent may include NaBH₄, ascorbic acid, trisodium citrate, ethylene glycol, or a combination thereof. The lithiophilic metal compound may be a nitrate, sulfate, perchlorate, etc. containing a lithiophilic metal, and may include, for example, AgNO₃, Ag₂SO₄, AgClO₄, or a combination thereof.

The heat treatment after lithiophilic metal loading can usually be performed at a temperature at which the sulfur-containing raw material can be decomposed and removed, for example, 100 °C to 500 °C, 150 °C to 500 °C, 200 °C to 450 °C, or 200 °C to 400 °C. Specifically, when using a thiol compound as a sulfur-containing raw material, it can be heat treated at 100 °C to 400 °C. The heat treatment may be performed for 2 hours to 20 hours in an atmosphere of nitrogen, argon, or a combination thereof.

A thickness of the negative electrode coating layer may be, for example, 100 nm to 40 µm, or 500 nm to 30 µm, or 1 µm to 20 µm. If the negative electrode coating layer 405 satisfies the above thickness range, a lithium metal layer of uniform thickness can be effectively formed during charging.

The negative electrode coating layer may further include a binder, for example, a conductive binder. Additionally, the negative electrode coating layer may further include an additive such as a filler, a dispersant, an ion conductive agent, and the like.

The binder of the negative electrode coating layer may include a non-aqueous binder, an aqueous binder, a dry binder, or a combination thereof.

The non-aqueous binder may include polyvinylchloride, carboxylated polyvinylchloride, polyvinylfluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The binder may be included in an amount of 0.1 to 5 wt%, 0.1 to 3 wt%, or 0.5 to 2 wt% based on 100 wt% of the negative electrode coating layer.

### Negative Electrode Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li) or an alloy thereof, and may be in the form of a foil or sheet. A thickness of the negative electrode current collector may be, for example, 1 µm to 20 µm, 5 µm to 15 µm, or 7 µm to 10 µm.

### Lithium Metal Layer

The negative electrode according to some example embodiments is a type of precipitation-type negative electrode, and an all-solid-state rechargeable battery including the same begins initial charging in the absence of a negative electrode active material, and during charging, a lithium metal layer is formed by precipitation or electrodeposition of high-density lithium metal between the negative electrode current collector and the negative electrode coating layer or on the negative electrode coating layer, which can serve as a negative electrode active material. Therefore, an all-solid-state rechargeable battery that has been charged at least once may include, for example, a negative electrode current collector, a lithium metal layer on the negative electrode current collector, and a negative electrode coating layer on the lithium metal layer. The lithium metal layer refers to a layer in which lithium ions are precipitated as lithium metal during the charging process of the battery, and can be expressed as a metal layer, a lithium layer, a lithium electrodeposition layer, or a negative electrode active material layer.

The lithium metal layer may include lithium metal or a lithium alloy. The lithium alloy may be Li-Al alloy, Li-Sn alloy, Li-In alloy, Li-Ag alloy, Li-Au alloy, Li-Zn alloy, Li-Ge alloy, or Li-Si alloy.

A thickness of the lithium metal layer may be 1 µm to 500 µm, 5 µm to 500 µm, 5 µm to 400 µm, 5 µm to 300 µm, or 10 µm to 200 µm. If the thickness of the lithium metal layer is too thin, it is difficult to function as a lithium storage layer, and if it is too thick, performance may decrease as the battery volume increases.

In an embodiment, a lithium metal layer having a uniform thickness and flatness may be formed by applying a carbon material having the aforementioned properties to the negative electrode coating layer. Therefore, according to an embodiment, the lithium metal layer formed during charging may have a very uniform thickness and have a small thickness deviation. For example, the deviation of the thickness of the lithium metal layer may be less than or equal to 40%, less than or equal to 30%, less than or equal to 20%, less than or equal to 15%, less than or equal to 10%, or less than or equal to 5%. For example, the deviation of the thickness of the lithium metal layer may be calculated by measuring the thickness of about 10 points in an electron microscope image of the cross-section of a negative electrode to calculate an arithmetic average, and then dividing the absolute value of the difference between one data and the arithmetic mean value by the arithmetic mean value and multiplying by 100. Also, for example, the thickness of the lithium metal layer may be 5 µm to 80 µm, and the standard deviation of the thickness may be 0.1 µm to 20 µm, 0.1 µm to 15 µm, 0.1 µm to 10 µm, 0.1 µm to 5 µm, or 0.1 µm to 3 µm. Likewise, the standard deviation of the thickness of the lithium metal layer may be calculated by measuring the thickness of about 10 points in an electron microscope photograph. If the deviation or standard deviation of the lithium metal layer thickness satisfies the above range, it means that lithium metal is well precipitated in the form of a film of uniform thickness, and thus the electrochemical properties of the all-solid-state rechargeable battery can be improved.

### Others

Meanwhile, the negative electrode according to an embodiment may further include a thin film on the surface of the negative electrode current collector, that is, between the negative electrode current collector and the negative electrode coating layer, or between the negative electrode current collector 401 the lithium metal layer. The thin film may include an element capable of forming an alloy with lithium. The element capable of forming an alloy with lithium may include, for example, Al, Ag, Au, Bi, Cu, Ge, In, Mg, Ni, Pd, Pt, Si, Sn, Zn, or a combination thereof. The thin film may further planarize the precipitation form of the lithium metal layer and help form a lithium metal layer of uniform thickness. The thin film may be formed, for example, in a vacuum deposition method, a sputtering method, a plating method, and the like. The thin film may have, for example, a thickness of 1 nm to 500 nm.

### All-solid-state Rechargeable Battery

In an embodiment, an all-solid-state rechargeable battery includes the aforementioned negative electrode and a positive electrode, and a solid electrolyte membrane between the positive electrode and the negative electrode.

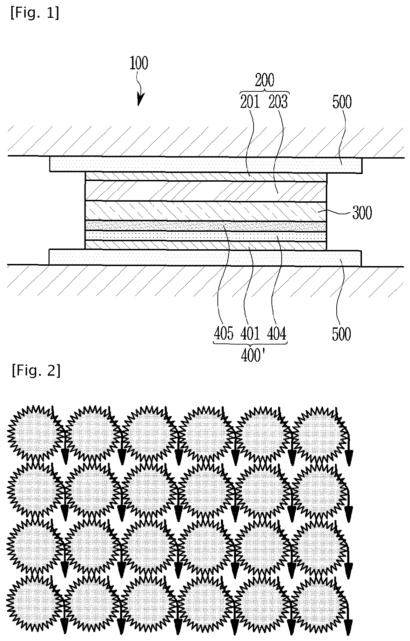

FIG. 1 is a cross-sectional view of an all-solid-state rechargeable battery according to an embodiment. Referring to FIG. 1, the all-solid-state rechargeable battery 100 may have a structure in which an electrode assembly formed by the negative electrode 400, solid electrolyte layer 300, and positive electrode 200 is housed in a battery case.

The negative electrode 400 includes a current collector 401 and a negative electrode coating layer 405 on the current collector as described above. In the all-solid-state rechargeable battery 100, initial charging begins in the absence of negative electrode active material, and during charging, high-density lithium metal is precipitated or electrodeposited between the current collector 401 and the negative electrode coating layer 405 or on the negative electrode coating layer 405 to form a lithium metal layer 404, which can serve as a negative electrode active material. In an all-solid-state rechargeable battery 100 that has been charged at least once, the negative electrode 400 includes, for example, a current collector 401, a lithium metal layer 404 on the current collector, and a negative electrode coating layer 405 on the metal layer.

The positive electrode 200 includes a positive electrode current collector 201 and a positive electrode active material layer 203.

The all-solid-state rechargeable battery 100 may further include at least one elastic layer 500 on the outside of at least either one of the positive electrode 200 and the negative electrode 400. FIG. 1 shows one electrode assembly including the negative electrode 400, the solid electrolyte layer 300, and the positive electrode 200, but two or more electrode assemblies may be stacked to manufacture an all-solid-state rechargeable battery.

### Positive Electrode

In an embodiment, the positive electrode may include a current collector and a positive electrode active material layer on the current collector, wherein the positive electrode active material layer may include a positive electrode active material and optionally may include a solid electrolyte, a binder, and/or a conductive material.

### Positive Electrode Active Material

The positive electrode active material may be a compound (lithiated intercalation compound) capable of intercalating and deintercallating lithium. For example, one or more types of composite oxides of lithium and a metal selected from cobalt, manganese, nickel, and combinations thereof may be used.

The composite oxide may be a lithium transition metal composite oxide, and specific examples may include a lithium nickel-based oxide, a lithium cobalt-based oxide, a lithium manganese-based oxide, a lithium iron phosphate-based compound, a lithium cobalt-free nickel-manganese-based oxide, overlithiated layered oxide, or a combination thereof.

For example, the positive electrode active material may be a high-nickel positive electrode active material in which the nickel content is 80 mol% or more based on 100 mol% of metals excluding lithium in a lithium transition metal composite oxide. In the high-nickel positive electrode active material, a nickel content may be 85 mol% or more, 90 mol% or more, 91 mol% or more, or 94 mol% or more, and 99 mol% or less, based on 100 mol% of the metal excluding lithium. The high-nickel positive electrode active material may achieve high capacity and may be applied to high-capacity, high-density rechargeable lithium batteries.

As a more specific example, a compound represented by any one of the following chemical formulas may be used. LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤ 0.5, 0 < α < 2); LiₐNi_{1-b-c}Mn_{b}X_{c}O_{2-α}D_{α} (0.90 ≤ a ≤ 1.8,0 ≤ b ≤ 0.5, 0 ≤ c ≤ 0.5, 0 < _{α} < 2);LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1);; LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); LiₐFePO₄ (0.90 ≤ a ≤ 1.8)

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; Q is Ti, Mo, Mn, or a combination thereof; Z is Cr, V, Fe, Sc, Y, or a combination thereof; and L¹ is Mn, Al, or a combination thereof.

The positive electrode active material may include lithium nickel-based oxide represented by Chemical Formula 11, lithium cobalt-based oxide represented by Chemical Formula 12, a lithium iron phosphate-based compound represented by Chemical Formula 13, and cobalt-free lithium nickel-manganese-based oxide represented by Chemical Formula 14, or a combination thereof.

[Chemical Formula 11] Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, 0≤b1≤0.1, M¹ and M² are one or more elements independently selected from Al, B, Ba, Ca, Ce, Co, Cr, Cu, Fe, Mg, Mn, Mo, Nb, Si, Sn, Sr, Ti, V, W, and Zr, and X is one or more elements selected from F, P, and S.

In Chemical Formula 11, 0.6≤x1≤1, 0≤y1≤0.4, and 0≤z1≤0.4 or 0.8≤x1≤1, 0≤y1≤0.2, and 0≤z1≤0.2.

[Chemical Formula 12] Liₐ₂Coₓ₂M³y₂O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is one or more elements selected from Al, B, Ba, Ca, Ce, Cr, Cu, Fe, Mg, Mn, Mo, Ni, Se, Si, Sn, Sr, Ti, V, W, Y, Zn, and Zr, and X is one or more elements selected from F, P, and S.

[Chemical Formula 13] Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is one or more elements selected from Al, B, Ba, Ca, Ce, Co, Cr, Cu, Mg, Mn, Mo, Ni, Se, Si, Sn, Sr, Ti, V, W, Y, Zn and Zr, and X is one or more elements selected from F, P, and S.

[Chemical Formula 14] Liₐ₄Niₓ₄Mn_{y4}M⁵_{z4}O_{2-b4}X_{b4}

In Chemical Formula 14, 0.9≤a2≤1.8, 0.8≤x4<1, 0<y4≤0.2, 0≤z4≤0.2, 0.9≤x4+y4+z4≤1.1, and 0≤b4≤0.1, M⁵ is one or more elements selected from Al, B, Ba, Ca, Ce, Cr, Fe, Mg, Mo, Nb, Si, Sn, Sr, Ti, V, W, and Zr, and X is one or more elements selected from F, P, and S.

An average particle diameter (D50) of the positive electrode active material may be 1 µm to 25 µm, for example 3 µm to 25 µm, 1 µm to 20 µm, 1 µm to 18 µm, 3 µm to 15 µm, or 5 µm to 15 µm. For example, the positive electrode active material may include small particles having an average particle diameter (D50) of 1 µm to 9 µm and large particles having an average particle diameter (D50) of 10 µm to 25 µm. The positive electrode active material having this particle size range can be harmoniously mixed with other components within the positive electrode active material layer and can achieve high capacity and high energy density. Herein, the average particle diameter means a diameter (D50) of particles having a cumulative volume of 50 volume% in the particle size distribution that is obtained by measuring the size (diameter or length of the major axis) of about 20 particles at random in a scanning electron microscope image for positive electrode active materials.

The positive electrode active material may be in the form of secondary particles made by agglomerating a plurality of primary particles or in the form of single particles. Additionally, the positive electrode active material may have a spherical or close to spherical shape, or may have a polyhedral or irregular shape.

Meanwhile, the positive electrode active material may include a buffer layer on the surface of the particles. The buffer layer may be expressed as a coating layer, a protective layer, etc., and may serve to lower the interfacial resistance between the positive electrode active material and the sulfide-based solid electrolyte particles. For example, the buffer layer may include lithium-metal-oxide, wherein the metal may be for example one or more elements selected from Al, B, Ca, Ce, Cr, Fe, Mg, Mo, Nb, Si, Sn, Sr, Ta, V, W, and Zr. The lithium-metal-oxide improves the performance of the positive electrode active material by facilitating the movement of lithium ions and electronic conduction, and is improved for lowering the interfacial resistance between the positive electrode active material and solid electrolyte particles.

The positive electrode active material may be included in an amount of 55 wt% to 99.5 wt%, for example, 65 wt% to 95 wt%, or 75 wt% to 91 wt% based on 100 wt% of the positive electrode active material layer.

### Binder

The binder improves binding properties of positive electrode active material particles with one another and with a current collector. Examples of the binder may be polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like, but are not limited thereto.

### Conductive Material

The negative electrode conductive material is included to provide electrode conductivity and any electrically conductive material may be used as a conductive material unless it causes a chemical change. Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, or silver; a conductive polymer such as a polyphenylene derivative, and the like; or a mixture thereof.

The amount of the binder and the conductive agent may be 0.5 wt% to 5 wt%, respectively, based on 100 wt% of the positive electrode active material layer.

The positive electrode active material layer may optionally further include a solid electrolyte. The solid electrolyte may include, for example, a sulfide-based solid electrolyte, an oxide-based solid electrolyte, a halide-based solid electrolyte, or a combination thereof, and a specific description of these will be provided later in the section on solid electrolyte membranes.

Based on 100 wt% of the positive electrode active material layer, the solid electrolyte may be included in an amount of 0.1 wt% to 35 wt%, for example, 1 wt% to 35 wt%, 5 wt% to 30 wt%, 8 wt% to 25 wt%, or 10 wt% to 20 wt%.

In the positive electrode active material layer, 65 to 99 wt% of the positive electrode active material and 1 to 35 wt% of the solid electrolyte may be included, for example, 80 to 90 wt% of the positive electrode active material and 10 to 20 wt% of the solid electrolyte may be included based on 100 wt% of the total of the positive electrode active material and the solid electrolyte. If the solid electrolyte is included in the positive electrode in this amount, the efficiency and cycle-life characteristics of the all-solid-state rechargeable battery may be improved without reducing the capacity.

Al may be used as the above current collector, but is not limited thereto.

### Solid Electrolyte Membrane

The solid electrolyte membrane includes a solid electrolyte. The solid electrolyte may be a type of inorganic solid electrolyte, and may include, for example, a sulfide-based solid electrolyte, an oxide-based solid electrolyte, a halide-based solid electrolyte, or a combination thereof.

### Sulfide-based Solid Electrolyte

The sulfide-based solid electrolyte particles may include, for example, Li₂S-P₂S₅, Li₂S-P₂S₅-LiX (wherein X is a halogen element, for example I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n is each an integer and Z is Ge, Zn, or Ga), Li₂S-GeS₂, Li₂S-SiS₂-Li₃PO₄, Li₂S-SiS₂-LiₚMO_{q} (wherein p and q each an integer and M is P, Si, Ge, B, Al, Ga, or In), or a combination thereof.

The sulfide-based solid electrolyte may be obtained by, for example, mixing Li₂S and P₂S₅ in a molar ratio of 50:50 to 90:10 or 50:50 to 80:20 and optionally, performing heat treatment. Within the above mixing ratio range, a sulfide-based solid electrolyte having excellent ionic conductivity can be manufactured. Here, other components such as SiS₂, GeS₂, and B₂S₃ may be added to further improve the ionic conductivity.

Mechanical milling or a solution method may be applied as a mixing method of sulfur-containing raw materials for preparing a sulfide-based solid electrolyte. The mechanical milling is to make starting materials into particulates by putting the starting materials in a ball mill reactor and fervently stirring them. The solution method may be performed by mixing the starting materials in a solvent to obtain a solid electrolyte as a precipitate. In addition, in the case of heat treatment after mixing, crystals of the solid electrolyte may be more robust and ionic conductivity may be improved. For example, the sulfide-based solid electrolyte may be prepared by mixing sulfur-containing raw materials and performing heat treatment two or more times. In this case, a sulfide-based solid electrolyte having high ionic conductivity and robustness may be prepared.

The sulfide-based solid electrolyte particles according to an embodiment, for example, may be prepared through a first heat treatment of mixing sulfur-containing raw materials and firing at 120 °C to 350 °C and a second heat treatment of mixing the resultant of the first heat treatment and firing the same at 350 °C to 800 °C. The first heat treatment and the second heat treatment may be performed in an inert gas or nitrogen atmosphere, respectively. The first heat treatment may be performed for 1 hour to 10 hours, and the second heat treatment may be performed for 5 hours to 20 hours. Small raw materials may be milled through the first heat treatment, and a final solid electrolyte can be synthesized through the second heat treatment. Through such two or more heat treatments, a robust sulfide-based solid electrolyte having high ionic conductivity and high performance can be obtained, and such a solid electrolyte may be suitable for mass production. The temperature of the first heat treatment may be, for example, 150 °C to 330 °C, or 200 °C to 300 °C, and the temperature of the second heat treatment may be, for example, 380 °C to 700 °C, or 400 °C to 600 °C.

For example, the sulfide-based solid electrolyte particles may include argyrodite-type sulfide. Argyrodite-type sulfide-based solid electrolyte particles may have high ionic conductivity close to the range of 10⁻⁴ to 10⁻² S/cm, which is the ionic conductivity of general liquid electrolytes at room temperature, and may form an intimate bond between the positive electrode active material and the solid electrolyte without causing a decrease in ionic conductivity, and furthermore, an intimate interface between the electrode layer and the solid electrolyte layer. An all-solid-state rechargeable battery including this can have improved battery performances such as rate capability, coulombic efficiency, and cycle life characteristics.

The argyrodite-type sulfide-based solid electrolyte particles may include, for example, a compound represented by Chemical Formula 21.

[Chemical Formula 21] (LiₐM¹_{b}M²_{c})(P_{d}M³ₑ)(S_{f}M⁴_{g})Xₕ

In Chemical Formula 21, 4 ≤ a ≤ 8, M¹ is Mg, Cu, Ag, or a combination thereof, 0 ≤ b<0.5, M² is Na, K, or a combination thereof, 0 ≤ c<0.5, M³ is Sn, Zn, Si, Sb, Ge, or a combination thereof, 0<d<4, 0 ≤ e<1, M⁴ is O, SOₙ, or a combination thereof, 1.5 ≤ n ≤ 5, 3 ≤ f ≤ 12, 0 ≤ g<2, X is F, Cl, Br, I, or a combination thereof, and 0 ≤ h ≤ 2.

For example, the halide element (X) may be necessarily included in Chemical Formula 21, and in this case, it may be expressed as 0<h≤2. For example, M¹ element may be necessarily included in Chemical Formula 21, and in this case, it may be expressed as 0<b<0.5. In Chemical Formula 21, M³ may be understood as an element substituted for P and may be 0<e<1. In Chemical Formula 12, M⁴ is substituted for S, for example may be 0<g<2, and f, a ratio of S, may be for example 3 ≤ f ≤ 7. If M⁴ is SOₙ, SOₙ may be for example S₄O₆, S₃O₆, S₂O₃, S₂O₄, S₂O₅, S₂O₆, S₂O₇, S₂O₈, SO₄, SO₅, and the like, and may be for example, SO₄.

For example, in Chemical Formula 21, a+b+c+h=7, d+e=1, and f+g+h=6.

As an example, the argyrodite-type sulfide-based solid electrolyte particles may include Li₃PS₄, Li₇P₃S₁₁, Li₇PS₆, Li₆PS₅Cl, Li₆PS₅Br, Li_{5.8}PS₄.₈Cl_{1.2}, Li_{6.2}PS_{5.2}Br_{0.8}, Li_{5.75}PS_{4.75}Cl_{1.25}, (Li_{5.69}Cu_{0.06})PS_{4.75}Cl_{1.25}, (Li_{5.72}Cu_{0.03})PS_{4.75}Cl_{1.25}, (Li_{5.69}Cu_{0.06})P(S_{4.70}(SO₄)_{0.05})Cl_{1.25}, (Li_{5.69}Cu_{0.06})P(S_{4.60}(SO₄)_{0.15})Cl_{1.25}, (Li_{5.72}Cu_{0.03})P(S_{4.725}(SO₄)_{0.025})Cl_{1.25}, (Li_{5.72}Na_{0.03})P(S_{4.725}(SO₄)_{0.025})Cl_{1.25}, Li_{5.75}P(S_{4.725}(SO₄)_{0.025})Cl_{1.25}, or a combination thereof, but are not limited thereto.

The argyrodite-type sulfide-based solid electrolyte may be prepared, for example by mixing lithium sulfide and phosphorus sulfide, and optionally lithium halide. Heat treatment may be performed after mixing them. The heat treatment may include, for example, two or more heat treatment steps. Here, the preparing of the argyrodite-type sulfide-based solid electrolyte may include, for example, a first heat treatment in which raw materials are mixed and fired at 120 °C to 350 °C, and a second heat treatment in which the resultant of the first heat treatment is mixed again and fired at 350 °C to 800 °C.

An average particle diameter (D50) of the sulfide-based solid electrolyte particles may be, for example, 0.1 µm to 5.0 µm or 0.1 µm to 3.0 µm, and may be small particles of 0.1 µm to 1.9 µm or large particles of 2.0 µm to 5.0 µm. The sulfide-based solid electrolyte particles may be a mixture of small particles having an average particle size of 0.1 µm to 1.9 µm and large particles having an average particle size of 2.0 µm to 5.0 µm. The average particle diameter of the sulfide-based solid electrolyte particles may be measured using an electron microscope image, and for example, a particle size distribution may be obtained by measuring the size (diameter or length of the major axis) of about 20 particles in a scanning electron microscope image, and D50 may be calculated therefrom.

### Oxide-based Solid Electrolyte

The oxide-based inorganic solid electrolyte may include, for example, Li₁₊ₓTi₂₋ₓAl(PO₄)₃(LTAP) (0≤x≤4), Li_{1+x+y}AlₓTi₂₋ₓSi_{y}P_{3-y}O₁₂ (0<x<2, 0 ≤ y<3), BaTiO₃, Pb(Zr,Ti)O₃ (PZT), Pb₁₋ₓLaₓZr_{1-y}Ti_{y}O₃ (PLZT) (0 ≤ x<1, 0 ≤ y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSiyP_{3-y}O₁₂ (0 ≤ x ≤ 1, 0 ≤ y ≤ 1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (wherein M = Te, Nb, or Zr; and x is an integer of 1 to 10), or a mixture thereof.

### Halide-based Solid Electrolyte

The solid electrolyte membrane may further include, for example, a halide-based solid electrolyte. The halide-based solid electrolyte may include a halogen element as a main component, meaning that a ratio of the halide element to all elements constituting the solid electrolyte is 50 mol% or more, 70 mol% or more, 90 mol% or more, or 100 mol%. As an example, the halide-based solid electrolyte may not include sulfur element.

The halide-based solid electrolyte may include a lithium element, a metal element other than lithium, and a halogen element. The metal element other than lithium may include Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof. The halogen element may be F, Cl, Br, I, or a combination thereof, and for example, it may be CI, Br, or a combination thereof. The halide-based solid electrolyte may be, for example, represented by LiₐM₁X₆ (M is Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof, X is F, Cl, Br, I, or a combination thereof, and 2≤a≤3). The halide-based solid electrolyte may include, for example, Li₂ZrCl₆, Li_{2.7}Y_{0.7}Zr_{0.3}Cl₆, Li_{2.5}Y_{0.5}Zr_{0.5}Cl₆, Li_{2.5}In_{0.5}Zr_{0.5}Cl₆, Li₂In_{0.5}Zr_{0.5}Cl₆, Li₃YBr₆, Li₃YCl₆, Li₃YBr₂Cl₄, Li₃YbCl₆, Li_{2.6}Hf_{0.4}Yb_{0.6}Cl₆, or a combination thereof, but is not limited thereto.

### Binder

The solid electrolyte membrane may further include a binder. For example, the binder may include a nitrile-butadiene rubber, a hydrogenated nitrile-butadiene rubber, a styrene-butadiene rubber, an acrylated styrene-butadiene rubber, an acrylonitrile-butadiene rubber, an acrylic rubber, a butyl rubber, a fluorine rubber, a natural rubber, polydimethylsiloxane, polyethyleneoxide, polyvinylpyrrolidone, polyvinylpyridine, chlorosulfonated polyethylene, polyvinyl alcohol, polytetrafluoroethylene, polyvinylidene fluoride, a polyvinylidene fluoride-hexafluoropropylene copolymer, polyvinylchloride, carboxylated polyvinylchloride, polyvinylfluoride, polyethylene, polypropylene, an ethylene-propylene copolymer, an ethylene-propylene-diene copolymer, polyamideimide, polyimide, poly(meth)acrylate, polyacrylonitrile, polystyrene, polyurethane, a copolymer thereof, or a combination thereof.

The binder may be included in an amount of 0.1 wt% to 3 wt%, for example 0.5 wt% to 2 wt%, or 0.5 wt% to 1.5 wt% based on 100 wt% of the solid electrolyte membrane. If the binder is included in the above range, the components in the solid electrolyte membrane can be well combined without reducing the ionic conductivity of the solid electrolyte, thereby improving the durability and reliability of the battery.

### Other Components

The solid electrolyte membrane may further optionally include an alkali metal salt, and/or an ionic liquid, and/or a conductive polymer.

For example, the alkali metal salt may be lithium salt. An amount of lithium salt in the solid electrolyte layer may be greater than or equal to 1 M or for example 1 M to 4 M. In this case, the lithium salt can improve ionic conductivity by improving lithium ion mobility in the solid electrolyte layer.

The lithium salt may be applied without type limitations, and may include, for example, LiPF₆, LiBF₄, LiSbF₆, LiAsF₆, LiClO₄, LiAlO₂, LiAlCl₄, LiPO₂F₂, LiCl, Lil, LiSCN, LiN(CN)₂, lithium bis(oxalato)borate (LiBOB), lithium difluoro (oxalato)borate (LiDFOB), lithium difluorobis(oxalato)phosphate (LiDFBP), lithium bis(trifluoromethane sulfonyl)imide (LiTFSI), lithium bis(fluoro)sulfonyl)imide (LiFSI), lithium bis(pentafluoroethanesulfonyl)imide (LiBETI), lithium trifluoromethane sulfonate, lithium tetrafluoroethane sulfonate, or a combination thereof.

For example, the lithium salt may be an imide-based lithium salt such as LiTFSI, LiFSI, LiBETI, or a combination thereof. The imide-based lithium salt may maintain or improve ionic conductivity by appropriately maintaining chemical reactivity with the ionic liquid.

The ionic liquid has a melting point below room temperature, so it is in a liquid state at room temperature and refers to a salt or room temperature molten salt composed of ions alone.

The ionic liquid may be a compound including a) at least one cation selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, or trizolium-based cation, and a mixture thereof, and b) at least one anion selected from BF₄-, PF₆-, AsF₆-, SbF₆-, AlCl₄-, HSO₄-, ClO₄-, CH₃SO₃-, CF₃CO₂-, Cl, Br-, I-, BF₄-, SO₄-, CF₃SO₃-, (FSO₂)₂N-, (C₂F₅SO₂)2N-, (C₂F₅SO₂)(CF₃SO₂)N-, and (CF₃SO₂)₂N-.

The ionic liquid may be, for example, one or more selected from N-methyl-N-propylpyrrolidinium bis(trifluoromethanesulfonyl)imide N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide.

A weight ratio of the solid electrolyte and the ionic liquid in the solid electrolyte layer may be 0.1:99.9 to 90:10, for example 10:90 to 90:10, 20:80 to 90:10, 30:70 to 90: 10, 40:60 to 90:10, or 50:50 to 90:10. The solid electrolyte layer satisfying the above ranges may maintain or improve ionic conductivity by improving the electrochemical contact area with the electrode. Accordingly, the energy density, discharge capacity, rate capability, etc. of the all-solid-state rechargeable battery may be improved.

An all-solid-state rechargeable battery may be a unit cell with a structure of positive electrode/solid electrolyte layer/negative electrode, a bicell with a structure of positive electrode/solid electrolyte layer/negative electrode/solid electrolyte layer/positive electrode, or a stacked battery in which the structure of the unit cell is repeated.

The shape of the all-solid-state rechargeable battery is not particularly limited, and may be, for example, coin-shaped, button-shaped, sheet-shaped, stacked-shaped, cylindrical, flat, and the like. In addition, the all-solid-state rechargeable battery may be applied to a large-sized battery used in an electric vehicle or the like. For example, the all-solid-state rechargeable battery may also be used in hybrid vehicles such as plug-in hybrid electric vehicles (PHEV). In addition, it may be used in a field requiring a large amount of power storage, and may be used, for example, in an electric bicycle or a power tool. In addition, the all-solid-state rechargeable battery may be used in various fields such as portable electronic devices.

### [Mode for Invention]

Hereinafter, examples and comparative examples of the present invention will be described. The following examples are only examples of the present invention and the present invention is not limited to the following examples.

### Examples 1 to 4 and Comparative Examples 1 to 6

### 1. Manufacturing of Negative Electrode

95 wt% of a carbon material with properties shown in Table 1 and 5 wt% of Ag with an average size of about 60 nm were dry-mixed to prepare a mixed powder.

The prepared Ag/C mixture, styrene butadiene rubber, and sodium carboxy methyl cellulose in a weight ratio of 100:6:3 were mixed in a water solvent to prepare a negative electrode coating layer composition. This negative electrode coating layer composition was coated on a 10 µm-thick stainless steel foil current collector and then, vacuum-dried at 80 °C to manufacture a precipitation-type negative electrode in which an about 10 µm-thick negative electrode coating layer was formed on the current collector.

### 2. Manufacturing of All-solid-state Rechargeable Battery Cell

85 wt% of LiNi_{0.8}Co_{0.15}Mn_{0.05}O₂ coated with Li₂O-ZrO₂ as a positive electrode active material, 13.5 wt% of a Li₆PS₅Cl solid electrolyte, 1.0 wt% of a polyvinylidene fluoride binder, and 0.5 wt% of a carbon nanotube conductive material were mixed to prepare a positive electrode composition. The prepared positive electrode composition was bar-coated on a positive electrode current collector and then, dried and compressed to manufacture a positive electrode.

A composition for a solid electrolyte membrane was prepared by adding 2 wt% of an acryl-based copolymer binder (SX-A334, Zeon Corp.) and 98 wt% of a solid electrolyte (Li₆PS₅Cl, D50 = 3.5 µm) in an isobutyl isobutyrate (IBIB) solvent. This composition was coated on a release PET film with a blade coater and then, pre-dried at about 50 °C and vacuum-dried at about 70 °C to form an about 400 µm-thick solid electrolyte membrane.

The solid electrolyte membrane on the negative electrode and then, the positive electrode on the solid electrolyte membrane were stacked to manufacture a unit cell, which was housed in a laminate film and then, subjected to warm isostatic pressing (WIP) at 500 Mpa for 30 minutes at 80 °C, manufacturing an all-solid-state rechargeable battery cell.

### Analysis Method of Properties of Carbon Material

In Table 1 below, circularity of primary particles of the carbon material was analyzed by using an Image J program after taking an image of the carbon material with FE-SEM. The FE-SEM image of the carbon material was used to randomly take 20 particles and measure their particle diameters, whose particle distribution was obtained to take a particle diameter (D₅₀) at a cumulative volume of 50 volume% as a particle diameter of the primary particles of the carbon material.

I_{D}/I_{G} of the carbon material was analyzed by Raman spectroscopy by using an analyzer, Raman 2010 Spectra (NT-MDT Development Co.) under the following conditions.
- Wavelength laser: 515 nm
- Minimum Raman shift: about 50 cm⁻¹
- Space resolution: 500 nm
- Measurement range: 500 to 4000 cm⁻¹

The d₀₀₂ of carbon material was analyzed by X-ray diffraction and calculated from the Bragg equation using the Bragg 2θ angle and a full width at half maximum (FWHM) of the (002) plane peak. X-ray diffraction analysis was performed under the following conditions.
- X-ray wavelength: 1.541838 Å (CuK α )
- Slit condition: Divergence Silt, Scattering Slit 0.5 °, Receiving Slit 0.15 mm
- Scan condition: 0.02 step, 2 °/min

A BET specific surface area of the carbon material was measured by using a measuring apparatus, HM model-1208 (MOUNTECH Co., Ltd.), in a nitrogen gas adsorption method. About 0.3 g of a carbon material sample was heated at 300 °C in a preprocessor under nitrogen atmosphere for 1 hour, additionally pre-heated at 300 °C in a specific surface area measuring apparatus for 15 minutes, and cooled to a temperature of liquid nitrogen for saturation and adsorption with a gas containing 30% of nitrogen and 70% of He. Subsequently, the carbon material was heated to room temperature to measure an amount of gas desorbed therefrom, which was used to calculate the specific surface area in a conventional BET method.

### Evaluation Example 1: Initial Charge/discharge Efficiency

The battery bells of Examples 1 to 4 and Comparative Examples 1 to 6 were charged to an upper limit voltage of 4.25 V at a constant current of 0.1 C and to 0.05 C at the constant voltage and then, discharged to a discharge cut-off voltage of 2.5 V at the 0.1 C at 45 °C for initial charge and discharge. A ratio of initial discharge capacity to initial charge capacity was calculated to obtain initial charge/discharge efficiency, which is shown in Table 1.

### Evaluation Example 2: Output Characteristics

After the initial charge and discharge of Evaluation Example 1, the cells were charged at 0.1 C and discharged at 0.33 C as a second cycle and then, charged at 0.1 C and discharged at 1 C as a third cycle. A ratio of discharge capacity at the third cycle to the initial discharge was calculated and shown as output characteristics in Table 1.

**(Table 1)**

| | Properties of carbon material | | | | | Electrochemical evaluation | |
|---|---|---|---|---|---|---|---|
| | Circu larity | Particle diameter of primary particles (nm) | I_{D}/I_{G} | d₀₀₂ (Å) | BET (m²/g) | Initial charge/d ischarge efficienc y (%) | Output charact eristics (%) |
| Example1 | 0.87 | 35 | 2.5 | 3.605 | 59 | 87 | 56.5 |
| Example2 | 0.91 | 35 | 2.6 | 3.61 | 55 | 88.8 | 62 |
| Example3 | 0.86 | 45 | 2.4 | 3.585 | 45 | 85.8 | 60 |
| Example4 | 0.84 | 30 | 2.2 | 3.555 | 88 | 82.1 | 53.2 |
| Comparative Example1 | 0.9 | 48 | 1.1 | 3.554 | 39 | 88.9 | 10.6 (NG) |
| Comparative Example2 | 0.81 | 5000 | 0.3 | 3.367 | 2 | 36.4 (NG) | Short (NG) |
| Comparative Example3 | 0.82 | 34 | 1.6 | 3.605 | 800 | 85.7 | 40.6 (NG) |
| Comparative Example4 | 0.68 | 5000 | 0.1 | 3.407 | 10 | 6 (NG) | Short (NG) |
| Comparative Example5 | 0.58 | 80 | 1.5 | 3.575 | 7 | 86.8 | 2.5 (NG) |
| Comparative Example6 | 0.55 | 25 | 1.1 | 3.493 | 80 | 85.1 | 40.7 (NG) |

Referring to Table 1, Examples 1 to 4, compared to Comparative Examples 1 to 6, were confirmed to exhibit high initial charge/discharge efficiency and simultaneously, excellent output characteristics. Specific details thereof will be provided later.

### Evaluation Example 3: Schematic View and Cross-sectional Analysis of Electrode Plate according to Characteristics of Carbon material

FIGS. 2, 4, 6, 8, and 10 show schematic views of the carbon materials for better understanding, wherein gray particles represent primary particles of the carbon materials, and arrows represent movement paths of lithium ions.

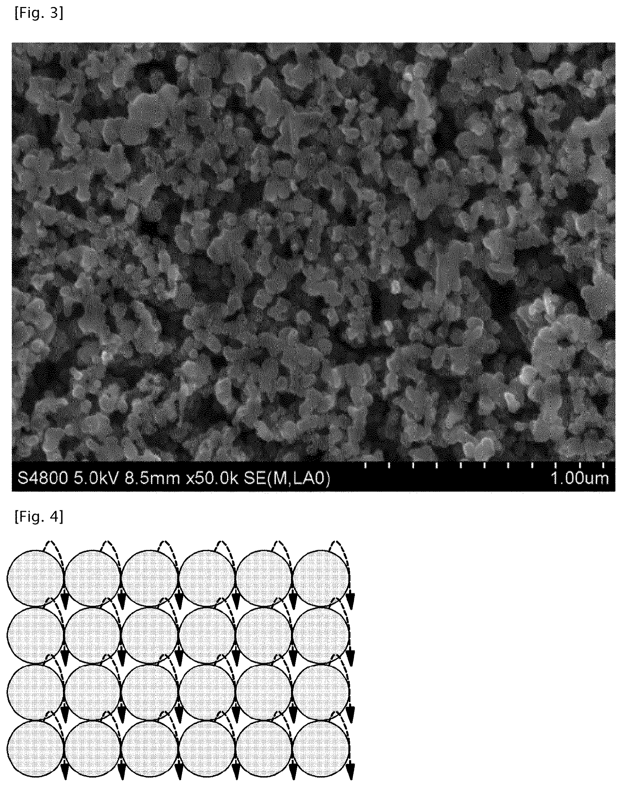

FIGS. 3, 5, 7, 9, 11, and 12 show cross-sectional images of the negative electrode plates taken with FE-SEM, which all used a scale bar of 1.00 µm.

FIG. 2 is a schematic view of the carbon material of Example 1, and FIG. 3 is an FE-SEM image of a cross-section of the negative electrode coating layer of Example 1. Referring to FIGS. 2 and 3 and Table 1, the carbon material in the negative electrode coating layer of Example 1 had d₀₀₂ of 3.605, primary particles with a particle diameter of about 35nm, circularity of 0.87, an I_{D}/I_{G} ratio of 2.5, and a BET specific surface area of 59 m²/g and thus a structure and crystallinity optimized for the movement of lithium ions.

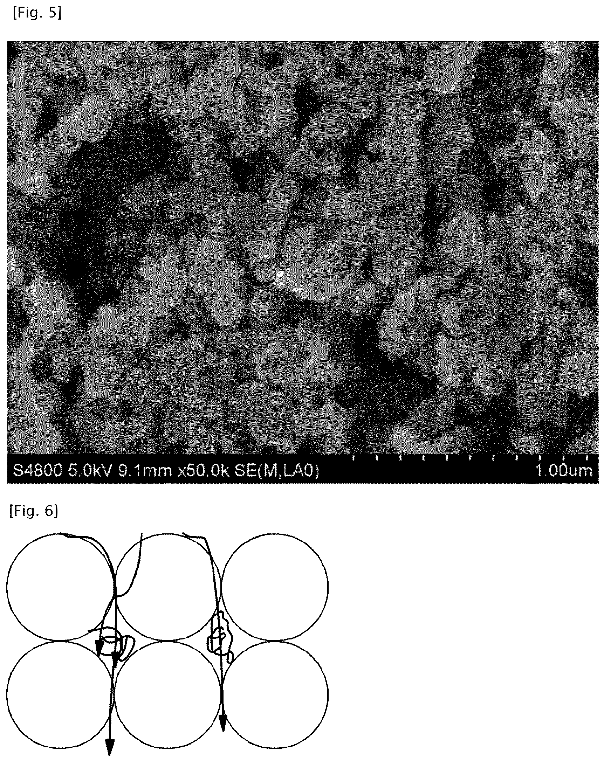

FIG. 4 is a schematic view of the carbon material of Comparative Example 1, and FIG. 5 is an FE-SEM image of a cross-section of the negative electrode coating layer of Comparative Example 1. The carbon material of Comparative Example 1 was a type of Super P conventionally used as amorphous carbon, and referring to FIGS. 4 and 5 and Table 1, the carbon material of Comparative Example 1 had an I_{D}/I_{G} ratio of 1.1, which showed a reduced degree of defects and increased energy of lithium movement and thus deteriorated output characteristics of the battery cell.

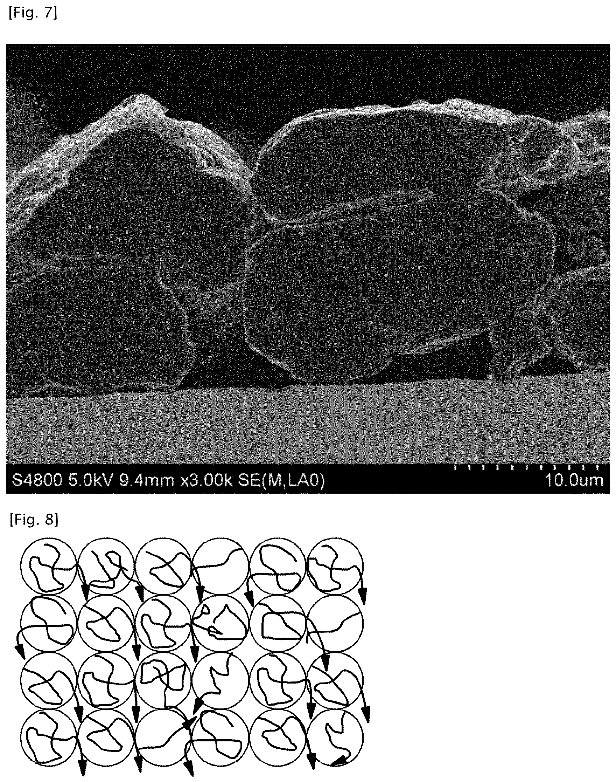

FIG. 6 is a schematic view of the carbon material of Comparative Example 2, and FIG. 7 is an FE-SEM image of a cross-section of the negative electrode coating layer of Comparative Example 2. Referring to FIGS. 6 and 7 and Table 1, the carbon material of Comparative Example 2 had low d₀₀₂ of 3.367, which showed low crystallinity, too large a particle diameter of primary particles of 5000 nm, and a low I_{D}/I_{G} ratio of 0.3 and thus a low degree of defects and high energy of lithium movement. Accordingly, referring to Table 1, the all-solid-state rechargeable battery cell of Comparative Example 2 exhibited all low initial charge/discharge efficiency and output characteristics.

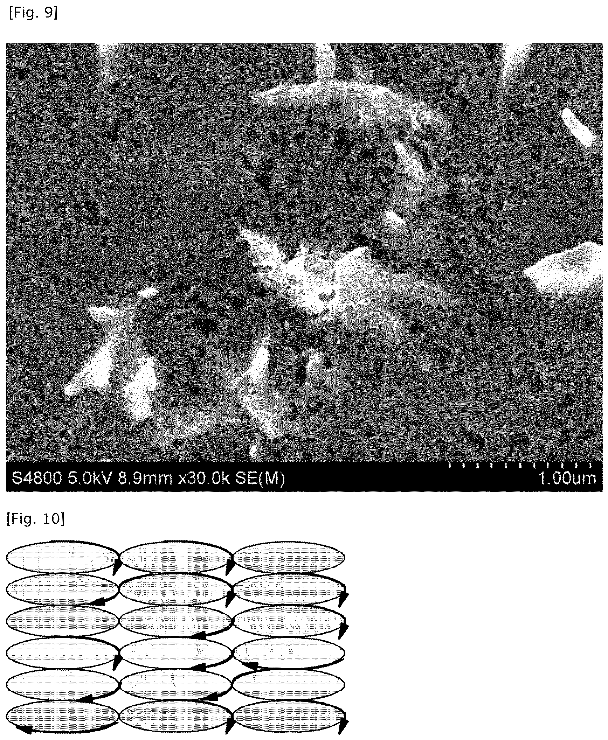

FIG. 8 is a schematic view of the carbon material of Comparative Example 3, and FIG. 9 is an FE-SEM image of a cross-section of the negative electrode coating layer of Comparative Example 3. The carbon material of Comparative Example 3 was a type of Ketjen black conventionally used as amorphous carbon, and referring to FIGS. 8 and 9 and Table 1, the carbon material of Comparative Example 3 had so high a BET specific surface area of 800 m²/g as not to make movement of lithium ions unsmooth, resultantly deteriorating output characteristics.

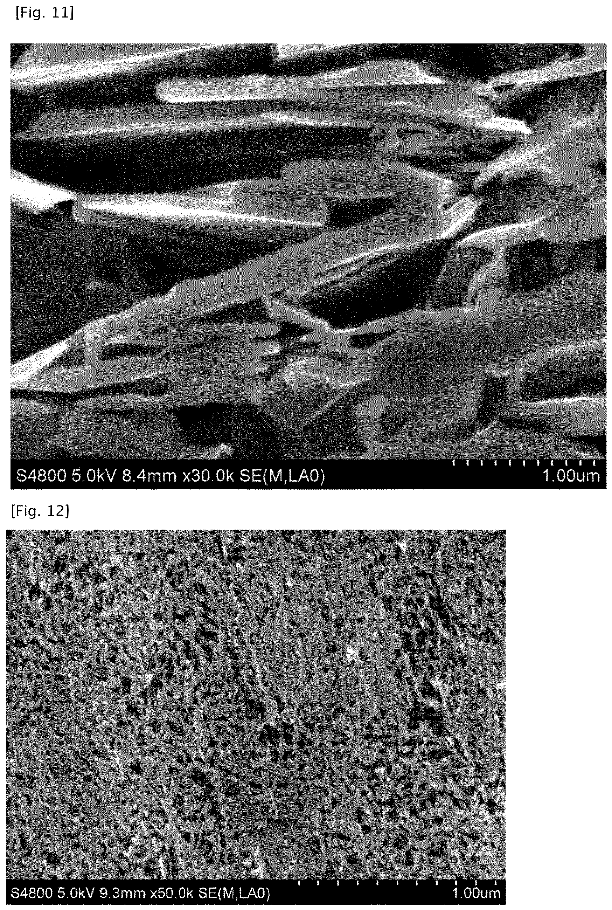

FIG. 10 is a schematic view of the carbon materials of Comparative Examples 4 and 5, FIG. 11 is an FE-SEM image of a cross-section of the negative electrode coating layer of Comparative Example 4, and FIG. 12 is an FE-SEM image of a cross-section of the negative electrode coating layer of Comparative Example 5. Referring to FIGS. 10 to 12 and Table 1, the carbon material of Comparative Example 4 was a type of plate-shaped carbon material, which was plate-shaped particles with too low circularity, a large primary particle size, i.e. with a major axis length of 5000 nm, low d₀₀₂ of 3.407 and thus low crystallinity, and a low I_{D}/I_{G} ratio of 0.1 and thus a low degree of defects and high energy of lithium movement. Accordingly, the battery cell of Comparative Example 4 exhibited very low initial charge/discharge efficiency and output characteristics. The carbon material of Comparative Example 5 was a type of branched carbon material having too low circularity of 0.58, which led to unsmooth movement of lithium ions and resultantly, deteriorated output characteristics of the battery cell.

The carbon material of Comparative Example 6, which was not shown in the drawing, was a type of oval carbon material having circularity of 0.55 and thus exhibited deteriorated lithium mobility, as shown in FIG. 10, d₀₀₂ of 3.493 and thus low crystallinity of 0.55, and a low I_{D}/I_{G} ratio of 1.1 and thus a deteriorated degree of defects and high energy of lithium movement. Accordingly, Comparative Example 6 exhibited deteriorated output characteristics of the battery cell.

### Evaluation Example 4: Analysis of Cross-section of Battery Cell in Charged State

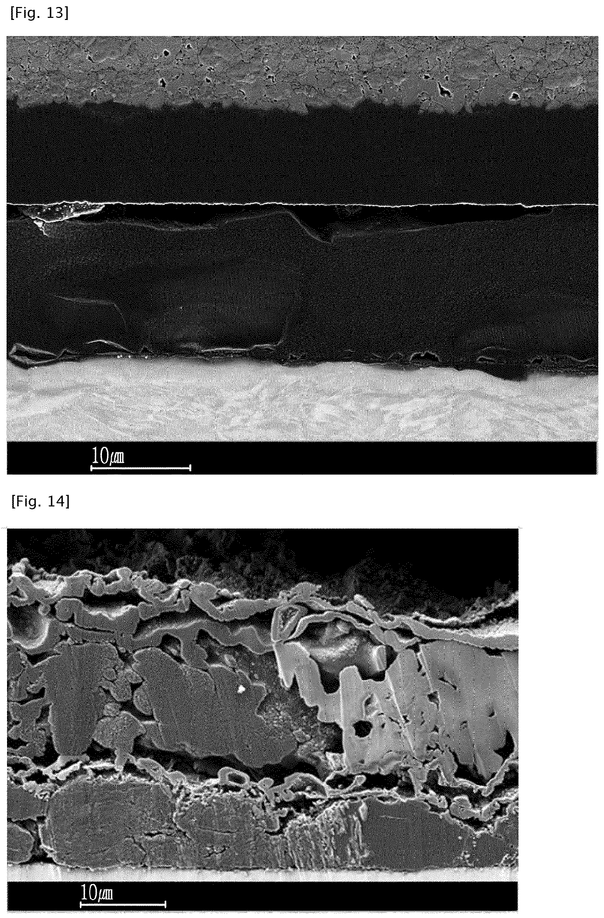

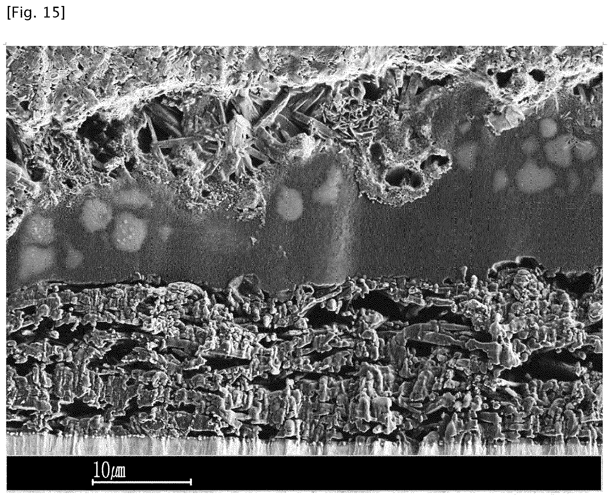

The all-solid-state rechargeable battery cells of Example 1 and Comparative Examples 4 and 5 were taken cross-sectional images after the initial charge with FE-SEM, which are respectively shown in FIGS. 13, 14, and 15. Referring to FIG. 13, the battery cell of Example 1 was confirmed that an about 16 µm-thick lithium metal layer was precipitated due to the charge and had overall a uniform thickness and a good shape. Meanwhile, Comparative Example 4 of FIG. 14 and Comparative Example 5 of FIG. 15 were confirmed that a nonuniform lithium metal layer was precipitated.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### [Description of Symbols]

| | | | |
|---|---|---|---|
| 100: | all-solid-state battery | 200: | positive electrode |
| 201: | positive electrode current collector | | |
| 203: | positive electrode active material layer | | |
| 300: | solid electrolyte layer | 400: | negative electrode |
| 401: | negative electrode current collector | 404: | lithium metal layer |
| 405: | negative electrode coating layer | 500: | elastic layer |

## Claims

1. A negative electrode for an all-solid-state rechargeable battery, comprising
a negative electrode current collector, and
a negative electrode coating layer disposed on the negative electrode current collector and including a carbon material,
wherein the carbon material has a d₀₀₂ value of greater than or equal to 3.500 and less than or equal to 3.620 as measured by X-ray Diffraction.

2. The negative electrode for the all-solid-state rechargeable battery as claimed in claim 1, wherein
the above carbon material has a d₀₀₂ value of greater than or equal to 3.555 and less than or equal to 3.610 as measured by X-ray diffraction.

3. The negative electrode for the all-solid-state rechargeable battery as claimed in claim 1, wherein
a particle diameter of primary particles of the carbon material is greater than or equal to 20 nm and less than or equal to 200 nm.

4. The negative electrode for the all-solid-state rechargeable battery as claimed in claim 3, wherein
the particle diameter of primary particles of the carbon material is greater than or equal to 20 nm and less than or equal to 70 nm.

5. The negative electrode for the all-solid-state rechargeable battery as claimed in claim 1, wherein
circularity of primary particle of the carbon material is greater than or equal to 0.80 and less than or equal to 1.0.

6. The negative electrode for the all-solid-state rechargeable battery as claimed in claim 5, wherein
the circularity of primary particle of the carbon material is greater than or equal to 0.84 and less than or equal to 1.0.

7. The negative electrode for the all-solid-state rechargeable battery as claimed in claim 1, wherein
the carbon material has a ratio (I_{D}/I_{G}) of D band intensity to G band intensity measured by Raman spectroscopy of greater than or equal to 1.5 and less than or equal to 3.0.

8. The negative electrode for the all-solid-state rechargeable battery as claimed in claim 7, wherein
the carbon material has a ratio (I_{D}/I_{G}) of D band intensity to G band intensity measured by Raman spectroscopy of greater than or equal to 2.0 and less than or equal to 3.0.

9. The negative electrode for the all-solid-state rechargeable battery as claimed in claim 1, wherein
the carbon material has a BET specific surface area of 10 m²/g to 200 m²/g.

10. The negative electrode for the all-solid-state rechargeable battery as claimed in claim 9, wherein
the carbon material has a BET specific surface area of 40 m²/g to 100 m²/g.

11. The negative electrode for the all-solid-state rechargeable battery as claimed in claim 1, wherein
the carbon material has a pore size between primary particles of greater than or equal to 10 nm and less than or equal to 1000 nm.

12. The negative electrode for the all-solid-state rechargeable battery as claimed in claim 1, wherein
the carbon material comprises a sulfur element, a sulfur-containing functional group, a sulfur-containing compound, or a combination thereof on the surface thereof.

13. The negative electrode for the all-solid-state rechargeable battery as claimed in claim 12, wherein
the carbon material comprises a sulfur element, a thiol group, or a combination thereof on the surface thereof.

14. The negative electrode for the all-solid-state rechargeable battery as claimed in claim 1, wherein
the negative electrode coating layer further comprises a lithiophilic metal.

15. The negative electrode for the all-solid-state rechargeable battery as claimed in claim 14, wherein
the lithiophilic metal comprises Al, Ag, Au, Bi, Cu, Ge, In, Mg, Ni, Pd, Pt, Si, Sn, Zn, or a combination thereof.

16. The negative electrode for the all-solid-state rechargeable battery as claimed in claim 14, wherein
an amount of the lithiophilic metal is 3 wt% to 40 wt% based on 100 wt% of a total of the carbon material and the lithiophilic metal.

17. The negative electrode for the all-solid-state rechargeable battery as claimed in claim 14, wherein
the carbon material and the lithiophilic metal are chemically bonded via sulfur.

18. The negative electrode for the all-solid-state rechargeable battery as claimed in claim 17, wherein
the negative electrode coating layer has a peak corresponding to a binding energy of the lithiophilic metal and sulfur in a spectrum measured by X-ray photoelectron spectroscopy.

19. The negative electrode for the all-solid-state rechargeable battery as claimed in claim 17, wherein
the lithiophilic metal comprises Ag, and
the negative electrode coating layer has a peak at 160 eV to 162 eV corresponding to an Ag-S binding energy in a S2p spectrum measured by X-ray photoelectron spectroscopy.

20. The negative electrode for the all-solid-state rechargeable battery as claimed in claim 1, wherein
a thickness of the negative electrode coating layer is 100 nm to 40 µm.

21. The negative electrode for the all-solid-state rechargeable battery as claimed in claim 1, wherein
the negative electrode further comprises a lithium metal layer formed by charging between the negative electrode current collector and the negative electrode coating layer.

22. The negative electrode for the all-solid-state rechargeable battery as claimed in claim 21, wherein
a thickness of the lithium metal layer is 5 µm to 500 µm, and
a deviation in the thickness of the lithium metal layer is less than or equal to 40%.

23. The negative electrode for the all-solid-state rechargeable battery as claimed in claim 22, wherein
a standard deviation of the thickness of the lithium metal layer is 0.1 µm to 20 µm.

24. An all-solid-state rechargeable battery, comprising
the negative electrode as claimed in any one of claim 1 to claim 23,
a positive electrode, and
a solid electrolyte membrane between the negative electrode and the positive electrode.

25. The all-solid-state rechargeable battery as claimed in claim 24, wherein
at least one of the positive electrode and the solid electrolyte membrane comprises a sulfide-based solid electrolyte.

26. The all-solid-state rechargeable battery as claimed in claim 25, wherein
the sulfide-based solid electrolyte comprises an argyrodite-type sulfide.

27. The all-solid-state rechargeable battery as claimed in claim 24, wherein
the positive electrode comprises a positive electrode active material, and
the positive electrode active material comprises a lithium nickel-based oxide, a lithium cobalt-based oxide, a lithium iron phosphate-based compound, a cobalt-free lithium nickel-manganese-based oxide, an overlithiated layered oxide, or a combination thereof.
